# EUROPÄISCHE PATENTSCHRIFT

(11) **EP 1 045 110 B1**
(45) Veröffentlichungstag und Bekanntmachung des Hinweises auf die Patenterteilung: **19.06.2002**
(21) Anmeldenummer: 00106524.2
(22) Anmeldetag: 26.03.2000
(51) Int. Cl.: E06B 9/56, H02G 11/00

(54) **Tor für Gebäude**
Shutter for a building
Porte pour bâtiment

(30) Priorität: 13.04.1999 DE 19916365
(43) Veröffentlichungstag der Anmeldung: 18.10.2000
(73) Patentinhaber: ALTEN GERÄTEBAU GMBH, D-30974 Wennigsen (DE)
(72) Erfinder: Berger, Harry, 30880 Laatzen (DE)
(74) Vertreter: Depmeyer, Jochen

(56) Entgegenhaltungen:
- EP-A- 0 887 508
- DE-A- 2 714 336
- DE-A- 3 304 400
- DE-A- 19 639 746
- US-A- 4 058 186

## Beschreibung

Die Erfindung betrifft ein mit einem heb- und senkbaren Verschlusskörper versehenes Tor für Gebäude, insb. ein Sektionaltor oder Rolltor, wobei dem Tor ein biegsames Elektrokabel zugeordnet ist, das vom unteren Rand des Verschlusskörpers zu einem feststehenden Anschluss geführt ist.

Derartige Elektrokabel verbinden am unteren Rand des Verschlusskörpers befindliche Zusatzeinrichtungen z.B. Kontaktgeber mit feststehenden elektrischen Anschlüssen. So sind derartige Elektrokabel vorgesehen, wenn der Verschlusskörper z.B. mit einer Schlupftür oder mit einer Kontaktleiste an der unteren Kante ausgestattet ist. Da sich der Abstand der unteren Kante des Verschlusskörpers von dem ortsfesten Anschluss beim Öffnen und Schliessen des Tores stark verändert, werden sog. Spiralkabel benutzt, die frei verlegt und somit ungeschützt sind. Ein solches Tor ist beispielsweise in DE-3 304 400 A1 dargestellt.

Es versteht sich, dass derartige Kabel z.B. bei einer Bewegung des Verschlusskörpers gefährdet sind. Dadurch ergibt sich ein nicht unerhebliches Sicherheitsrisiko.

Durch die Erfindung sollen diese Nachteile vermieden werden; demgemäss liegt der Erfindung die Aufgabe zugrunde, durch eine besondere Anordnung des Elektrokabels die Betriebssicherheit der eingangs erwähnten Tore zu verbessern.

Zur Lösung dieser Aufgabe ist erfindungsgemäss dem Elektrokabel eine seitlich neben dem Verschlusskörper bzw. im Randbereich des Verschlusskörpers befindliche Umlenkrolle zugeordnet, zu der das hinter einer Abdeckung befindliche Elektrokabel geführt ist, und zudem bildet der hinter der Umlenkrolle befindliche, zum festen Anschluss führende Abschnitt des Elektrokabels eine Längenausgleichsschleife, die vorzugsweise gewichtsbelastet ist und sich vorzugsweise ebenfalls hinter einer Abdeckung befindet.

Demgemäss ist das Elektrokabel nicht mehr fliegend verlegt und unmittelbaren mechanischen Einwirkungen ausgesetzt, sondern nunmehr hinter einer Abdeckung geschützt verlegt.

Mit Vorteil wird für die Abdeckung des von der unteren Kante des Verschlusskörpers zur Umlenkrolle führenden Abschnittes des Elektrokabels das der Laufrollenführung des Verschlusskörpers dienende Metallprofil benutzt, das in aller Regel an einem Schenkel die Laufschiene mit etwa c-förmigem Querschnitt trägt. Damit erübrigen sich besondere Massnahmen, um den vorgenannten Abschnitt des Elektrokabels geschützt und abgedeckt anzuordnen. Neben diesem Metallprofil kann sich eine gewichtsbelastete Ausgleichsschleife für das Elektrokabel befinden, die ihrerseits z.B. durch ein schlagfestes Kunststoffprofil überdeckt wird, wobei sich auch das der Ausgleichsschleife zugeordnete Belastungsgewicht innerhalb dieses Kunststoffprofils befindet.

Weitere Einzelheiten der Erfindung werden anhand der Zeichnung erläutert, in der ein Ausführungsbeispiel dargestellt ist. Es zeigen :
Fig. 1 eine Teilinnenansicht eines in der Schliesstellung ( Ruhestellung ) befindlichen Sektionaltores und
Fig. 2 einen Schnitt nach der Linie II - II von Fig. 1.

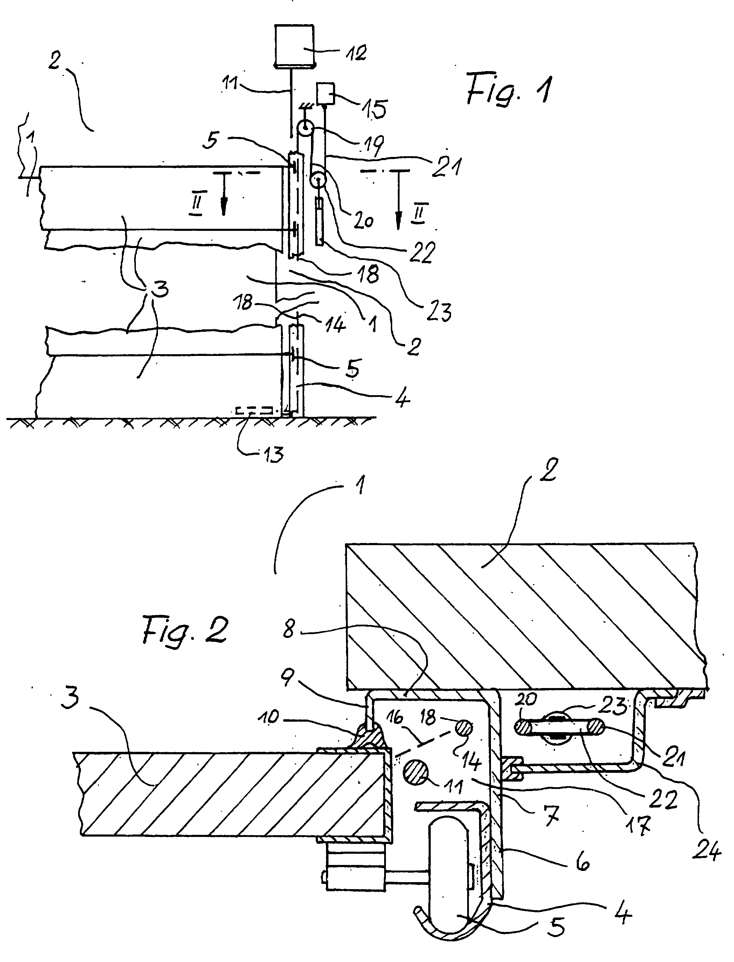

Durch das Sektionaltor soll die Öffnung 1 des Gebäudes 2 verschlossen werden können.

Das Sektionaltor besteht in bekannter Weise aus mehreren Sektionen 3, die scharnierartig miteinander verbunden sind. Zu beiden Seiten sind die Sektionen 3 durch Rollen 5 an Schienen 4 geführt, die einen etwa c-förmigen Querschnitt haben und mit ihrer geschlossenen Seite innen an einem senkrecht vom Gebäude 2 abstehenden Schenkel 6, eines etwa L-förmigen Profils 7 befestigt sind. Dieses Profil 7 ist mit seinem Steg 8 innen am Gebäude 2 befestigt und trägt an seinem kürzeren Schenkel 9 eine Abdichtung 10, die aussen am Rand der Sektionen 3 anliegt.

Dem Sektionaltor ist ein Hubelement mit Zugseil 11 zugeordnet, das sich zuden zwischen den Profilen 4, 7 befindet. Der windenartige Antrieb, der beliebig ausgeführt sein kann, ist bei 12 angedeutet.

In üblicher Weise kann der Verschlusskörper zum Öffnendes Tores entweder senkrecht nach oben über die Öffnung 1 oder aber oberhalb der Öffnung 1 nach hinten in eine etwa waagerechte Schienenstrecke überführt werden.

Am unteren Rand des aus den Sektionen 3 bestehenden Verschlusskörpers befinden sich in aller Regel Fühler od. dgl. bzw. elektrische Kontakte, die z.B. bei Schlupftüren oder Kontaktleisten erfoderlich sind. Ein dafür geeignetes Schaltelement ist bei 13 aufgezeigt. Es muss durch ein biegsames Elektrokabel 14 mit einem stationären, feststehenden Anschluss 15 verbunden werden. Auf die Darstellung der weiterhin erforderlichen Schaltund Steueereinrichtungen, die beliebig ausgeführt werden können, ist verzichtet worden.

Von dem Schaltelement 13 aus ist das Elektrokabel 14 über einen festen Ausleger 16 am unteren Rand der unten liegenden Sektion 3 in den praktisch allseitig geschlossenen Kanal 17 geführt, der von den Profilen 7 und 5 und den angrenzenden Teilen der Sektionen 3 begrenzt ist. Der hier verlegte Abschnitt 18 des Elektrokabels 14 führt zu einer oberhalb des Verschlusskörpers befindlichen, seitlich neben dem Verschlusskörper angeordneten ortsfesten Umlenkrolle 19, von der aus das Elektrokabel 14 über eine nach unten gerichtete Längenausgleichsschleife mit den senkrechten Abschnitten 20, 21 und der Rolle 22 mit Gewicht 23 und schliesslich wieder nach oben zu dem stationären Anschluss 15 führt.

Die seitlich neben dem Profil 7 befindliche Längenausgleichschleife ist wiederum durch ein Schutzprofil 24 abgedeckt, um so auch die Längenausgleichsschleife gegen unerwünschte Beeinflussung z.B. durch Stoss zu schützen.

Es versteht sich, dass sich beim Öffnen des Tores das Gewicht 23 absenkt und damit ein Längenausgleich eintritt. Beim Schliessen des Tores werden die Abschnitte 20, 21 wieder verkürzt bzw. das Gewicht 23 angehoben.

## Patentansprüche

1. Mit einem heb- und senkbaren Verschlusskörper versehenes Tor für Gebäude, insb. Sektional- oder Rolltor, wobei dem Tor ein biegsames Elektrokabel zugeordnet ist, das vom unteren Rand des Verschlusskörpers zu einem feststehenden Anschluss geführt ist, **dadurch gekennzeichnet, dass** dem Elektrokabel (14) eine im seitlichen Randbereich des Verschlusskörpers (3) befindliche Umlenkrolle (19) zugeordnet ist, zu der das hinter einer Abdeckung (4,7) befindliche Elektrokabel vom Verschlusskörper aus gestreckt geführt ist, und dass das Elektrokabel hinter der Umlenkrolle eine vorzugsweise gewichtsbelastete Längenausgleichsschleife (20,21) bildet.

2. Tor nach Anspruch 1, **dadurch gekennzeichnet, dass** die Abdeckung zumindest teilweise von einer Schiene (4) für Laufrollen (5) des Verschlusskörpers (3) und/oder einem diese Schiene tragenden Profil (7) gebildet ist.

3. Tor nach Anspruch 1, **dadurch gekennzeichnet, dass** sich auch die Längenausgleichsschleife (20-23) hinter einer Abdeckung (24) befindet.

4. Tor nach Anspruch 3, **dadurch gekennzeichnet, dass** die Abdeckung ein aufgesetztes, vorzugsweise aus einem Kunststoff bestehendes Profil (24) ist.

5. Tor nach Anspruch 1, **dadurch gekennzeichnet, dass** das Elektrokabel (14) am unteren Ende des Verschlusskörpers (3) von einem mit diesem verbundenen Ausleger (16) gehalten ist.

6. Tor nach Anspruch 1, **dadurch gekennzeichnet, dass** die Umlenkrolle (19) oberhalb der durch das Tor zu verschliessenden Öffnung (1) des Gebäudes (2) angeordnet ist.

7. Tor nach Anspruch 1, **dadurch gekennzeichnet, dass** sich die Längenausgleichsschleife seitlich aussen neben einer Schiene (4) für Laufrollen (5) des Verschlusskörpers (3) bzw. einem diese tragenden Profil (7) angeordnet ist.

8. Tor nach Anspruch 7, **dadurch gekennzeichnet, dass** sich die Längenausgleichsschleife unmittelbar neben der Schiene (4) bzw. dem Profil (7) befindet.

9. Tor nach Anspruch 1, **dadurch gekennzeichnet, dass** die Längenausgleichsschleife zwei senkrechte Längenabschnitte (20,21) des Elektrokabels (14) aufweist, die am unteren Ende eine lose, vorzugsweise gewichtsbelastete Rolle (22) zum Umlenken des Elektrokabels tragen.

## Claims

1. Door for buildings, more esp. a sectional or roller door, which is provided with a raisable and lowerable closing member, a flexible electric cable being associated with the door and extending from the lower edge of the closing member to a fixed connection, **characterised in that** a guide roller (19), which is situated in the lateral edge region of the closing member (3), is associated with the electric cable (14), the electric cable, situated behind a covering (4, 7), extending to said roller from the closing member in a stretched manner, and **in that** the electric cable forms, behind the guide roller, a preferably weighted length equalising loop (20, 21).

2. Door according to claim 1, **characterised in that** the covering is formed at least partially by a rail (4) for track rollers (5) of the closing member (3) and/or by a profile (7) carrying said rail.

3. Door according to claim 1, **characterised in that** the length equalising loop (20-23) is also situated behind a covering (24).

4. Door according to claim 3, **characterised in that** the covering is an attached profile (24) preferably formed from a plastics material.

5. Door according to claim 1, **characterised in that** the electric cable (14) is retained at the lower end of the closing member (3) by an arm (16), which is connected to said closing member.

6. Door according to claim 1, **characterised in that** the guide roller (19) is disposed above the opening (1) of the building (2) to be closed by the door.

7. Door according to claim 1, **characterised in that** the length equalising loop is disposed laterally externally adjacent a rail (4) for track rollers (5) of the closing member (3) or respectively adjacent a profile (7) carrying said rail.

8. Door according to claim 7, **characterised in that** the length equalising loop is situated directly adjacent the rail (4) or respectively the profile (7).

9. Door according to claim 1, **characterised in that** the length equalising loop has two vertical elongate portions (20, 21) of the electric cable (14), which portions carry at the lower end a loose, preferably weighted roller (22) for guiding the electric cable.

## Revendications

1. Portail pour bâtiment muni d'un élément de fermeture pouvant être soulevé et abaissé, notamment portail à section ou portail roulant, un câble électrique souple, qui va du bord inférieur de l'élément de fermeture à une borne fixe, étant associé au portail, **caractérisé en ce qu'**il est associé au câble (14) électrique, un galet (19) de renvoi qui se trouve dans la région latérale du bord de l'élément (3) de fermeture et vers lequel va, en s'étendant à partir de l'élément de fermeture, le câble électrique se trouvant derrière un élément de couverture (4, 7), et **en ce que** le câble électrique forme en aval du galet de renvoi une boucle (20, 21) de compensation de longueur, de préférence à contrepoids.

2. Portail suivant la revendication 1, **caractérisé en ce que** l'élément de couverture est formé au moins en partie d'un rail (4) pour des galets (5) roulant de l'élément (3) de fermeture et/ou d'un profilé (7) portant ce rail.

3. Portail suivant la revendication 1, **caractérisé en ce que** la boucle (20 à 23) de compensation de longueur se trouve aussi derrière un élément de couverture (24).

4. Portail suivant la revendication 3, **caractérisé en ce que** l'élément de couverture est un profilé (24) posé, de préférence en une matière plastique.

5. Portail suivant la revendication 1, **caractérisé en ce que** le câble (14) électrique est maintenu à l'extrémité inférieure de l'élément (3) de fermeture par un bras (16) qui est relié à ce dernier.

6. Portail suivant la revendication 1, **caractérisé en ce que** le galet (19) de renvoi est monté au-dessus de la baie (1) du bâtiment (2) à fermer par le portail.

7. Portail suivant la revendication 1, **caractérisé en ce que** la boucle de compensation de longueur est disposée latéralement à l'extérieur à côté d'un rail (4) pour galets (5) roulant de l'élément (3) de fermeture ou d'un profilé (7) qui le porte.

8. Portail suivant la revendication 7, **caractérisé en ce que** la boucle de compensation de longueur se trouve directement à côté du rail (4) ou du profilé (7).

9. Portail suivant la revendication 1, **caractérisé en ce que** la boucle de compensation de longueur comporte deux tronçons (20, 21) verticaux du câble (14) électrique, qui portent à l'extrémité inférieure un galet (22) fou, de préférence à contrepoids, pour renvoyer le câble électrique.
